# EUROPEAN PATENT APPLICATION

(11) **EP 4 815 109 A1**
(43) Date of publication of application: **30.09.2026**
(21) Application number: 25382295.1
(22) Date of filing: 27.03.2025
(51) Int. Cl.: H01M 10/613, H01M 10/6556, H01M 10/6567, H01M 50/507, H01M 10/625, H01M 50/503, H01M 50/516

(54) **COOLING OF BATTERY CELLS**

(71) Applicant: Fundación Cidetec, 20014 Donostia-San Sebastián (ES)
(72) Inventor: VERTIZ NAVARRO, Gorka, 20014 DONOSTIA-SAN SEBASTIÁN (ES); LARRAÑAGA ECEIZA, Manex, 20014 DONOSTIA-SAN SEBASTIÁN (ES)
(74) Representative: ZBM Patents - Zea, Barlocci & Markvardsen

(57) **Abstract**

A system for cooling a battery cell is provided, comprising a busbar having defined length, width, and height dimensions, wherein the width is the distance between a first surface and an opposite second surface of the busbar. The busbar includes a first three-dimensional (3D) region extending along the entire width of the busbar, having smaller length and height dimensions compared to those of the busbar, and a second 3D region constituting the remainder of the busbar. A welding zone is located on the first surface within the first 3D region. The busbar further comprises a conduit for a coolant fluid, fully contained within the second 3D region. This configuration allows effective cooling of the battery cell while ensuring a clear separation between welding and cooling functions, improving cooling efficiency and integration flexibility.

## Description

This disclosure relates to thermal management systems for battery cells, including liquid or fluid-based cooling solutions.

### BACKGROUND

The increasing energy density and power demands of modern battery systems, particularly in automotive applications, pose significant challenges for thermal management. Efficient cooling is critical to maintaining battery performance, safety, longevity, and reliability. Inadequate heat dissipation may lead to performance degradation, accelerated aging, and safety risks such as thermal runaway.

Existing direct liquid cooling strategies, including immersion cooling and partial direct liquid cooling, have demonstrated high thermal performance. However, their widespread adoption remains limited due to structural and integration complexities, fluid management challenges, and difficulties in effectively targeting critical heat pathways. While immersion cooling provides excellent heat dissipation, it often requires large amounts of coolant and complex system integration. Partial liquid cooling solutions, on the other hand, aim to reduce fluid consumption and simplify design but may fail to provide sufficient localized cooling in high-thermal-stress areas of the battery system.

In many implementations, the thermal management of battery electrical interconnections, such as busbars, remains a challenge. A busbar is an electrical conductor, typically made of copper or aluminium, used to collect and distribute current between battery cells or modules. Due to the high currents involved, busbars must combine excellent electrical conductivity with robust mechanical and thermal performance. However, poor heat dissipation at these critical points may increase electrical resistance, cause overheating, and reduce system efficiency. While various approaches have been explored for cooling battery cells, managing thermal loads at interconnection points is crucial to ensuring efficient energy distribution and overall system reliability.

There remains a need for improved battery cooling solutions that address these thermal and integration challenges, effectively manage heat dissipation at critical electrical interfaces, and enhance the overall efficiency and reliability of battery systems.

### SUMMARY

In an aspect, a system is provided for cooling a battery cell, the system comprising a busbar having defined dimensions of length, width, and height, with the width specifically being the distance between a first surface and an opposite second surface of the busbar. The busbar comprises two distinct three-dimensional (3D) regions: a first 3D region extending along the entire width of the busbar but having length and height dimensions smaller than those of the busbar, and a second 3D region constituting the remainder of the busbar. The first 3D region includes a welding zone situated on the first surface of the busbar, and the second 3D region fully incorporates a conduit configured to carry a coolant fluid.

The internal channels within the busbar are thus specifically designed to avoid the welding area between battery cell tabs and busbars. Welding directly over the channel path could potentially damage the channels and cause fluid leaks, especially considering that the thickness of the busbars may be preferably minimized due to cost, weight, and volume constraints, and that welding depth must be sufficient to ensure proper electrical conductivity. By clearly defining functional boundaries, the disclosed system may ensure more reliable and efficient cooling. This innovative design may improve thermal management, enhance safety, simplify integration, and/or significantly increase the operational reliability and lifespan of the battery system, thus providing substantial benefits over conventional cooling solutions.

The first and second 3D regions do not correspond to separate components but to rather conceptually defined portions of the busbar that serve to clearly differentiate the arrangement of the welding zone and the cooling conduit in relation to each other. This distinction ensures that the coolant flow does not interfere with the welded connections, thereby preventing potential structural damage or fluid leakage while maintaining efficient thermal dissipation. The remaining cross-sectional area of the busbar, i.e., excluding the conduit, should ideally guarantee adequate electrical conduction. Insufficient conduction could lead to excessive Joule heating, potentially causing overheating issues. This careful balance of thermal and electrical considerations contributes to improved safety, performance, and reliability of the battery system.

The present disclosure further comprises several inventive aspects that represent specific embodiments or complementary implementations of the primary inventive aspect described above. These inventive aspects specifically include, but are not limited to: (1) a conduit having a cross-section comprising at least one of a sharp-pointed region, a stepped region, and a rounded region; and (2) a busbar holder specifically configured to support one or more busbars and enable fluid interconnection between their cooling conduits.

Each of these inventive aspects may independently incorporate any one or more optional features described throughout the present disclosure, including features specifically related to the primary inventive aspect (busbar with separated welding and cooling conduit regions), the respective inventive aspects themselves, and/or any combination thereof. The applicant expressly reserves the right to pursue each of these inventive aspects individually or in any combination in separate divisional applications.

In some implementations, the busbar may comprise multiple first 3D regions. This allows for the electrical connection of several battery cells within a single busbar, or for connecting a single battery cell to the busbar at different welding points. Such a configuration may optimize current distribution, reduce resistance losses, and enhance overall energy efficiency. Despite the presence of multiple first 3D regions, the second 3D region remains functionally distinct and uninterrupted with respect to them. This may ensure that the integrated coolant conduit efficiently dissipates heat from each first 3D region and, more broadly, from the entire battery system, including the busbar.

Furthermore, by integrating several conceptual first 3D regions into a single busbar, the system may reduce the number of separate busbars required, thereby simplifying manufacturing, lowering assembly complexity, and enhancing modularity. This design not only enables flexible integration of multiple battery cells, but also ensures optimized thermal distribution across different welding points. As a result, the system offers improved cooling performance and increased adaptability to a wide range of battery module architectures, making it an efficient and cost-effective solution for high-performance energy storage applications.

In some examples, the busbar may have a prismatic shape with constant cross-sectional dimensions along its length. This configuration may advantageously facilitate uniform heat distribution, simplify manufacturing processes, and enable easier assembly and integration into various battery system configurations.

Additionally, the first 3D region may itself exhibit a prismatic geometry with consistent cross-sectional dimensions. Such a shape may enhance uniform heat conduction and promote efficient thermal dissipation at the welding interface. This may contribute to predictable and optimized thermal management, complementing the uniform heat distribution provided by the overall prismatic structure of the busbar.

In some implementations, the conduit may have a serpentine shape along all or part of its length within the second 3D region. Such a serpentine configuration may significantly enhance heat transfer efficiency by increasing the contact surface area between the coolant fluid and the busbar, thereby maximizing thermal exchange and ensuring highly effective cooling performance within limited spatial constraints.

In examples of systems for cooling a battery cell, the conduit may comprise an inlet and an outlet arranged on the same side of the busbar, the conduit having a substantially U-shaped configuration surrounding the first 3D region on which the welding zone is located. This U-shaped design may advantageously concentrate the coolant flow around the critical welding area, thereby significantly enhancing localized heat dissipation. Moreover, positioning both the inlet and outlet on the same side may simplify fluid management, reduce piping complexity, and facilitate a compact and space-efficient system integration.

According to some implementations, the busbar may further comprise a recess or a through-hole configured to accommodate a power connector, as well as facilitate voltage implementation and sensing (voltage measurement). This recess or through-hole may be strategically arranged such that it does not interfere with the welding zone or the conduit. This thoughtful design may enhance the overall reliability and safety of the battery system by preventing accidental damage to the coolant conduit during the installation of power connectors. Additionally, it may simplify the assembly process, reduce potential maintenance issues, and contribute to a more robust and user-friendly integration.

In some examples, the conduit may have a cross-section comprising at least one of a sharp-pointed region, a stepped region, and a rounded region. Such specifically tailored cross-sectional features may enhance the thermal exchange capabilities of the conduit by inducing beneficial turbulences in the coolant flow. This turbulence may significantly improve heat transfer efficiency, promoting rapid heat dissipation and optimized cooling performance within the busbar, thus enhancing battery reliability and operational lifespan.

In particular configurations, the conduit may have a cross-section comprising a sharp-pointed region and a first stepped region positioned on opposite sides. Optionally, rounded regions may be included between the sharp-pointed and stepped portions. Additionally, second and third stepped regions may be provided on other sides of the cross-section, optionally oriented differently (e.g., perpendicularly) relative to the sharp-pointed and first stepped regions. Such intricate and specifically designed geometries may significantly enhance internal fluid dynamics by promoting controlled turbulence and optimizing coolant flow patterns. This design may maximize heat transfer within the busbar, effectively reducing hotspots and ensuring uniform and efficient thermal management. Consequently, these tailored geometrical features may substantially improve the reliability, efficiency, and operational lifespan of battery cooling systems compared to conventional conduit designs.

Furthermore, according to examples, a busbar holder may also be provided, configured to support a plurality of busbars as described throughout the present disclosure. The plurality of busbars may comprise at least a first busbar and a second busbar arranged or arrangeable on the busbar holder such that their respective conduits collectively form a common conduit. The busbar holder may comprise a connecting conduit configured to fluidly interconnect the conduits of the supported busbars, thereby creating a unified and continuous coolant path. This arrangement may advantageously enable the conduits of the first and second busbars to be fluidly connected either in series or parallel configurations. Such flexibility may facilitate optimal adaptation of cooling circuits to specific battery system requirements, significantly enhance thermal performance, simplify assembly, and reduce complexity and potential points of failure within the cooling infrastructure.

A battery cell module may also be provided comprising a plurality of battery cells, at least one busbar holder and a plurality of busbars supported by the busbar holder, the busbars and the busbar holder according to the present disclosure. The battery cells may be electrically connected to corresponding busbars by welding one or more battery cell tabs to welding zones of the busbars. This integrated battery cell module configuration may simplify both electrical and thermal management functions, significantly reducing complexity and assembly time. The direct welding connection may ensure reliable electrical conductivity, minimize resistance and heat generation, and contribute to the overall robustness, operational efficiency, and durability of the battery cell module. Additionally, the strategic integration and clear separation of cooling channels and welding zones within the busbars effectively prevents undesirable interference between welding operations and coolant flow paths. This structural configuration ensures optimal heat dissipation precisely at critical locations without compromising conduit integrity, significantly enhancing thermal performance, minimizing thermal gradients, and ultimately improving battery cell efficiency, reliability, and operational lifespan.

### BRIEF DESCRIPTION OF THE DRAWINGS

Non-limiting examples of present disclosure will be described in the following, with reference to the appended drawings, in which:
Figure 1 is a schematic illustration of a busbar for use in battery cell cooling systems, according to examples.
Figure 2 is a schematic illustration of a busbar such as that shown in Figure 1, detailing the coolant conduit and a welding zone, according to examples.
Figure 3 is a schematic illustration of a busbar such as that shown in Figure 1, detailing the coolant conduit and multiple welding zones, according to examples.
Figure 4 is a schematic illustration of the cross-sectional geometry of the coolant conduit in a busbar such as those shown in Figures 1 to 3, according to examples.
Figure 5 is a schematic illustration of an assembly comprising a battery cell and busbars such as those shown in Figures 1 to 3, according to examples.
Figure 6 is a schematic illustration of a busbar holder configured to support busbars such as those shown in Figures 1 to 3, according to examples.
Figure 7 is a schematic illustration of an assembly comprising several busbars such as those shown in Figures 1 to 3 and a busbar holder such as that shown in Figure 6, according to examples.
Figure 8 is a schematic illustration of a cutaway view illustrating internal features of an assembly similar to that shown in Figure 7, according to examples.

### DETAILED DESCRIPTION OF EXAMPLES

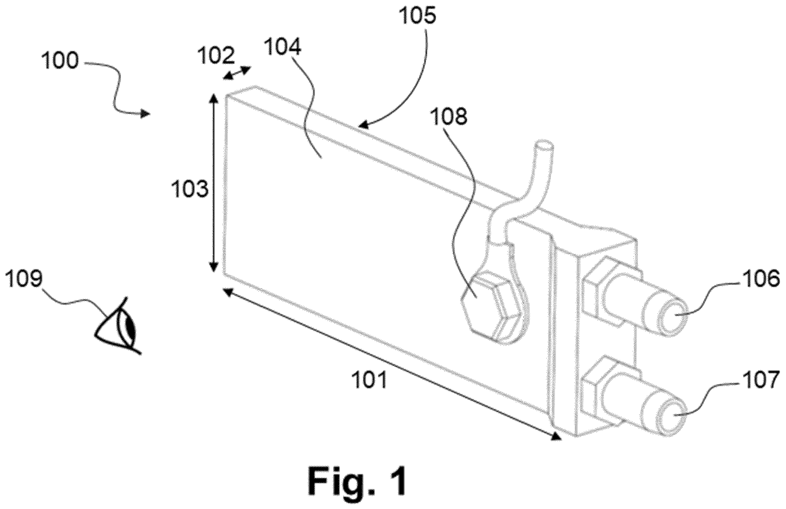

Figure 1 is a schematic graphical representation of a busbar 100 for systems aimed at cooling a battery cell, according to examples. As depicted, such busbars 100 may have a length 101, a width 102, and a height 103. The width 102 may be defined as the distance between a first surface 104 and an opposite second surface 105 of the busbar 100. The busbar 100 may comprise a first 3D region (not shown) and a second 3D region (not shown either). The first 3D region may extend along the entire width 102 of the busbar 100 and may have dimensions in length and height smaller than the overall length 101 and height 103 of the busbar 100. The second 3D region may be or may form the remainder of the busbar 100. The first 3D region may include a welding zone (also not shown) located on the first surface 104 of the busbar 100. The busbar 100 may further comprise a coolant conduit (not shown too) fully included in the second 3D region. Viewpoint indicated by drawn eye 109 illustrates the perspective used in other figures. Figure 1 further shows an electrical connection or joint 108 to provide electric power to the busbar 100 and, therefore, to corresponding battery cell via the busbar 100, as well as to facilitate the positioning of the busbar 100 and enable voltage sensing (voltage measurement). Busbar 100 may have a prismatic shape with constant cross-sectional dimensions along its length 101. Similarly, the first 3D region (not shown) may also have prismatic shape with constant cross-sectional dimensions along its length, which is shorter than the total length 101 of the busbar 100.

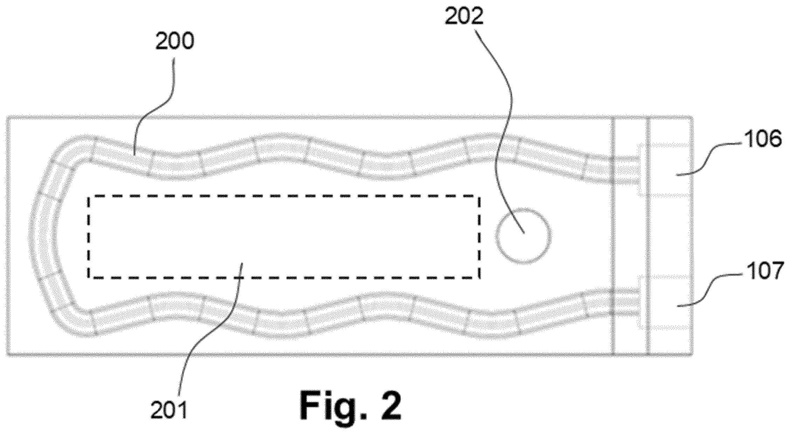

Figure 2 is a schematic graphical representation of a busbar such as the ones shown in Figure 1 but, in this case, including details on internal coolant conduit and welding zone, according to examples. Number references from Figure 1 may be reused in this description of Figure 2 to indicate same or similar elements. The view of the busbar 100 illustrated in Figure 2 may be from point of view 109, so that the first surface 104 of the busbar 100 is fully seen. For reasons of clarity of illustration, certain internal elements of the busbar 100, such as coolant conduits, are schematically represented as visible, based on a conceptual "X-ray vision" perspective. These representations are abstract and intended to illustrate internal functionalities rather than depict exact visual appearances or proportions. Busbar 100 of Figure 2 is shown including its internal coolant conduit 200, which may be U-shaped and/or may follow a serpentine path (within the second 3D region) along all or part of the entire length of the conduit 200. As depicted, the conduit 200 may comprise an inlet 106 and an outlet 107 (or vice versa) arranged on same side of the busbar 100, and/or the conduit 200 may surround the first 3D region on/at which the welding zone 201 is located. The busbar 100 may include a recess or a through-hole 202 configured to receive a power connector 108.

The recess or through-hole 202 may be arranged in/on the busbar 100 in such a manner that it advantageously maintains functional and/or operational independence between the welding zone 201 and the conduit 200, while preserving the structural integrity of the busbar 100.

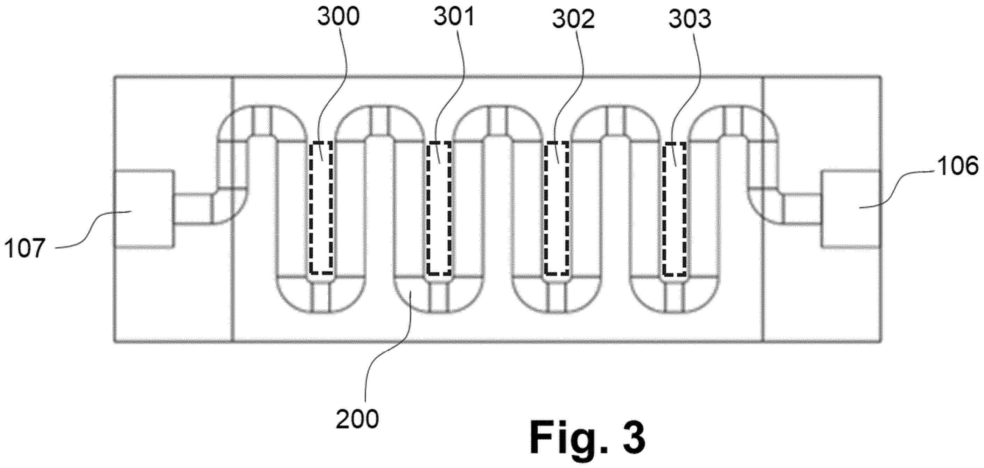

Figure 3 is a schematic graphical representation of a busbar such as the ones shown in Figure 1 but, in this case, reflecting details on coolant conduit and several welding zones, according to examples. Number references from previous Figures 1 and 2 may be reused in this description of Figure 3 to indicate same or similar elements. The view of the busbar 100 illustrated in Figure 3 may be from point of view 109, so that the first surface 104 of the busbar 100 is fully shown. For reasons of clarity of illustration, certain internal elements of the busbar 100, such as coolant conduits, are schematically represented as visible, based on a conceptual "X-ray vision" perspective. Busbar 100 of Figure 3 is shown including its internal coolant conduit 200, which may follow a boustrophedon-shaped path within the second 3D region. As depicted, the conduit 200 may comprise an inlet 106 and an outlet 107 (or vice versa) arranged on different sides (e.g., opposite to one another) of the busbar 100, and/or the conduit may be arranged so as to avoid the first 3D region on/at which the welding zones 300 - 303 are located. In fact, it is particularly illustrated in Figure 3 an optional model of busbar with not only one first 3D region but having several first 3D regions 300 - 303.

With reference to Figures 2 and 3, it is emphasized that the first 3D region(s) and the second 3D region are not separate physical components of the busbar 100, but rather conceptually or theoretically defined portions thereof. These regions are identified solely for the purpose of clearly distinguishing the spatial arrangement between the welding zones 201, 300-303 and the cooling conduit 200. This conceptual distinction ensures that the coolant flow through conduit 200 does not interfere with the welded joints at welding zones 201 and 300-303, thereby avoiding potential structural damage or fluid leakage. At the same time, it allows for efficient thermal dissipation to be maintained across the entire busbar structure.

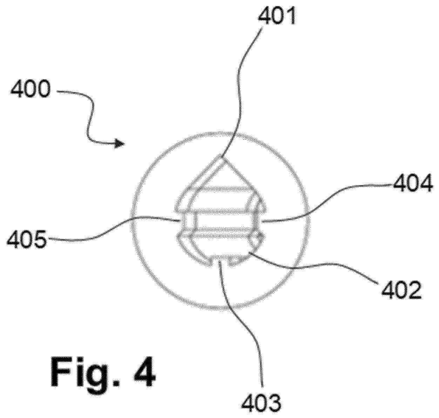

Figure 4 is a schematic graphical representation of the cross-section of a conduit of a busbar such as the ones shown in Figures 1 - 3, according to examples. Number references from previous Figures 1 - 3 may be reused in the description of Figure 4 to indicate the same or similar elements. As depicted, the conduit 200 may have a cross-section 400 comprising at least one of sharp-pointed region 401, stepped region 403 - 405, and rounded region 402. In particular examples, the conduit cross-section 400 may comprise a sharp-pointed region 401 and a first stepped region 403 arranged at opposite sides of the cross-section 400.

In implementations, the conduit cross-section 400 may further comprise one or more rounded regions 402 optionally arranged between the sharp-pointed region 401 and the stepped region 403. In certain configurations, the conduit cross-section 400 may additionally or alternatively comprise a second stepped region 404 and a third stepped region 405 arranged at same or other sides of the cross-section 400. Said second and third stepped regions 404, 405 may be oriented in a direction different from that of the sharp-pointed region 401 and the first stepped region 403. For example, second and third stepped regions 404, 405 may be oriented perpendicular to sharp-pointed region 401 and the first stepped region 403.

According to further examples, one or more of the sharp-pointed 401, stepped 403 - 405, or rounded 402 regions may be configured to extend continuously and uniformly along the entire length of the conduit 200, or may instead exhibit non-uniform profiles or deliberate discontinuities along the flow direction. Such variations may be designed to promote controlled turbulence and enhance internal circulation of the coolant fluid, thereby improving local heat transfer rates and contributing to more effective and homogeneous thermal dissipation throughout the busbar 100.

These specially designed cross-sectional features may improve the thermal transfer performance of the conduit 200 by inducing beneficial turbulence within the coolant flow. The resulting flow behaviour may significantly enhance heat transfer efficiency, enabling more rapid heat removal and improved cooling throughout the busbar 100. This, in turn, may contribute to increased battery system reliability and extended operational lifespan.

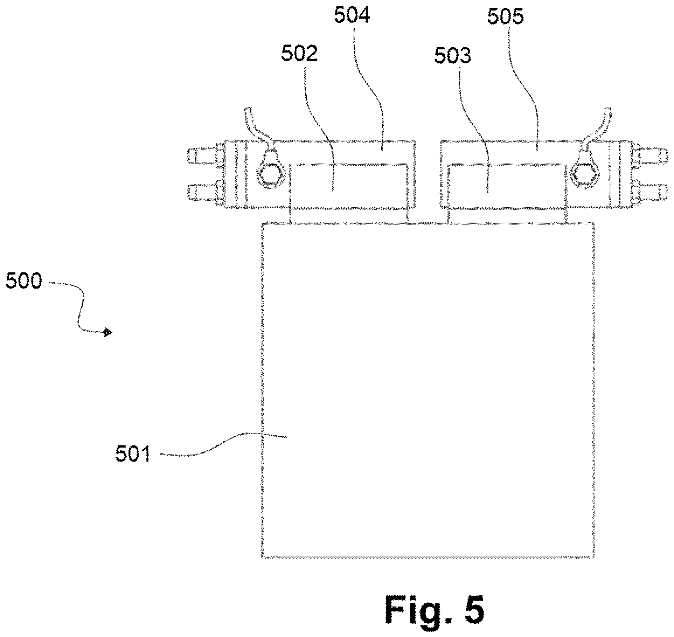

Figure 5 is a schematic graphical representation of an assembly comprising a battery cell and busbars such as those shown in Figures 1 - 3, according to examples. Number references from previous Figures 1 - 4 may be reused in the description of Figure 5 to indicate the same or similar elements. The battery cell assembly 500 may include a battery cell 501 having tabs 502 and 503, and busbars 504 and 505 having the same or a similar configuration as those illustrated in Figures 1 - 4. Each tab 502, 503 of the battery cell 501 may be welded to one or more welding zones of the corresponding busbar 504, 505. As specifically illustrated, tab 502 is welded to busbar 504, and tab 503 is welded to busbar 505. For the sake of descriptive simplicity, the illustrated example does not include any busbar holder according to present disclosure. However, sufficient details on busbar holders are provided in this description such that their integration into, or combination with, assemblies such as that shown in Figure 5 would be readily understood by a skilled person.

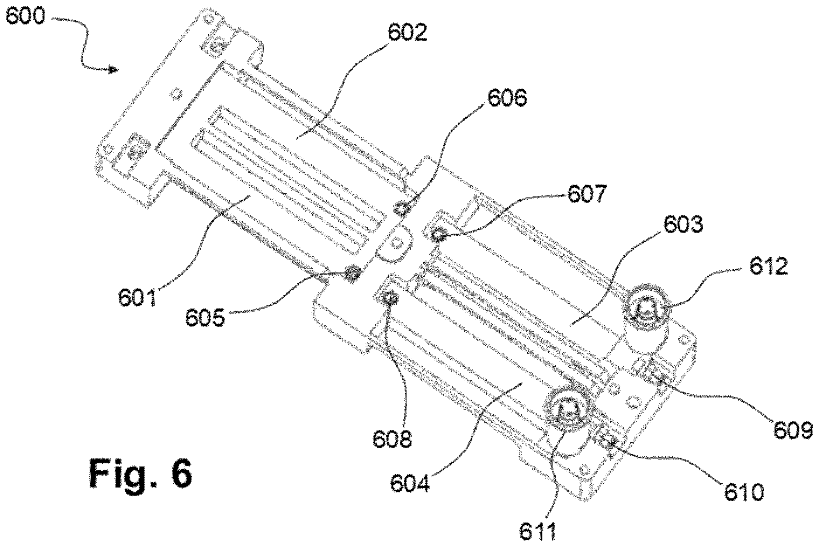

Figure 6 is a schematic graphical representation of a busbar holder configured to support busbars such as those shown in Figures 1 - 3, according to examples. Number references from previous Figures 1 - 5 may be reused in the description of Figure 6 to indicate the same or similar elements. As illustrated, the busbar holder 600 may be configured to support a plurality of busbars, such as busbars 100, 504, and 505 shown in Figures 1 - 5. These busbars may be arranged, on or within the busbar holder 600, such that their respective coolant conduits 200 collectively form a common conduit. The busbar holder 600 may include cavity portions (or female holder parts) 601 - 604, into which corresponding male portions of the busbars 100, 504, 505 can be individually inserted. In some implementations, the entire busbar 100, 504, 505 may be the male busbar portion configured for insertion into corresponding cavity of the holder 600. Such fitting may be achieved, for example, via a press-fitting or click-fitting mechanism. This configuration may simplify assembly and improve mechanical stability and fluid sealing. The busbar holder 600 may comprise one or more connecting conduits 605 - 608 and 606 - 607, configured to fluidly interconnect the coolant conduits 200 of the supported busbars. This interconnection defines a common coolant conduit for all busbars coupled to the holder 600. The common conduit may include an inlet 609 and an outlet 610 (or vice versa), which are formed or provided by the busbar holder 600. The busbar holder 600 may be configured to establish fluid communication between the conduits 200 of the busbars 100, 504, 505 according to a serial connection approach, a parallel connection approach, or a combination thereof. As also illustrated, busbar holder 600 may further comprise common power connections 611, 612, configured to enable power transfer from battery cells 501, via busbars 100, 504, 505, to intended load or device.

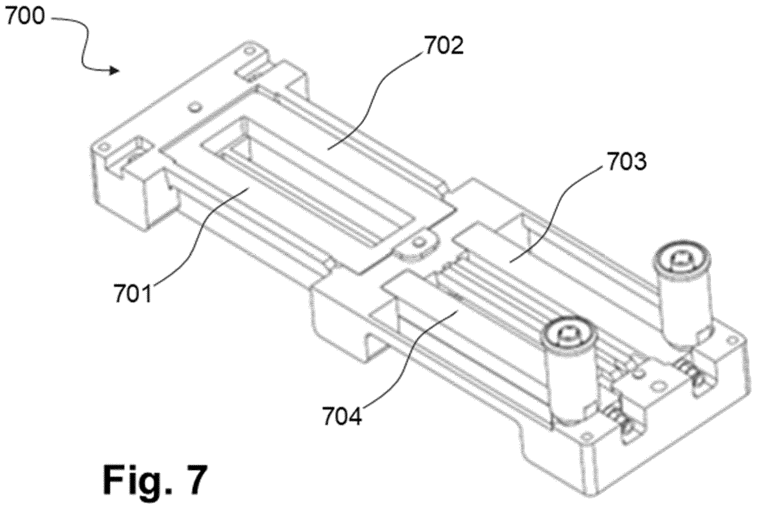

Figure 7 is a schematic graphical representation of an assembly comprising several busbars such as those shown in Figures 1 - 3, and a busbar holder such as that shown in Figure 6, according to examples. Number references from previous Figures 1 - 6 may be reused in the description of Figure 7 to indicate the same or similar elements. The illustrated assembly 700 refers to a busbar holder 600 that is the same as, or similar to, the one depicted in Figure 6. In this case, busbars 701 - 704 are shown as being integrated with, mounted to, or installed in or on the busbar holder 600.

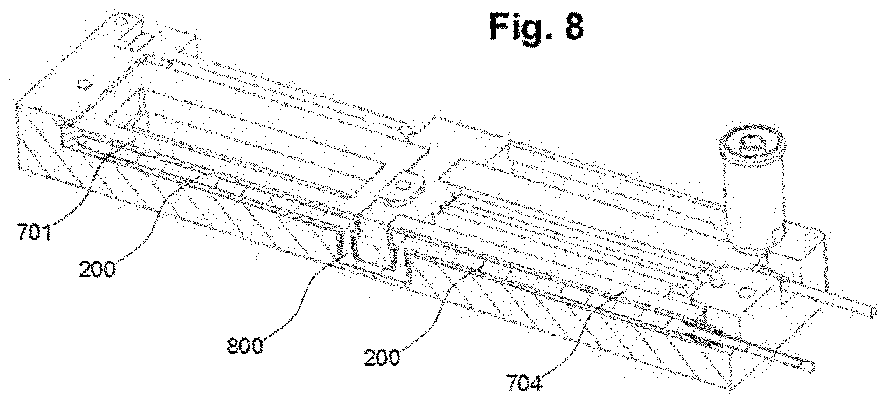

Figure 8 is a schematic graphical representation of a cutaway view illustrating internal features of an assembly similar to that shown in Figure 7, according to examples. Number references from previous Figures 1 - 7 may be reused in the description of this Figure 8 to indicate the same or similar elements. The cutaway view reveals the internal coolant conduit 200 of busbar 701 and the internal coolant conduit 200 of busbar 704, along with an intermediate fluid channelling path 800 provided by the busbar holder 600. This path 800, which may be U-shaped as shown in the particular example illustrated, enables the formation of a common fluid conduit interconnecting all the busbars 701 - 704 supported by the busbar holder 600. It is apparent that the remaining busbars (shown but not referenced in this figure) supported by the holder 600 are fluidly interconnected via additional intermediate fluid channelling paths similar to the one illustrated (800), thereby forming a continuous fluid network among all busbars 701 - 704. This design may offer advantages in terms of simplified assembly, improved system integration, and reduced number of required components. The integration of fluid conduits within the busbars 701 - 704 and the use of dedicated holder 600 to support and interconnect them, may contribute to a more compact, modular, and manufacturable solution. This may result in lower production costs, reduced assembly time, and improved reliability due to the minimized number of interconnections and mechanical parts.

Battery cell modules (or simply battery modules) may also be provided, comprising a plurality of battery cells (such as the one shown in Figure 5), one or more busbar holders (such as those shown in Figures 6 and 7), and a plurality of busbars (such as those shown in Figures 1 - 3) supported by the one or more busbar holders. The battery cells may be electrically connected to corresponding busbars via welding of the battery cell tabs to welding zones of the respective busbars. Such battery modules may be formed by stacking battery cell assemblies according to, for example, Figure 5, wherein the busbars are supported by one or more busbar holders as shown in Figures 6 - 7. The one or more busbar holders, with busbars installed therein or thereon, may define a common coolant channel for the entire battery module, or alternatively, a separate common coolant channel for each battery cell assembly stacked within the module. In the latter case, additional conduit connections or connectors between the distinct common coolant channels of each battery cell assembly may be provided to form an overall coolant channel for the entire battery module.

Although various busbars, holders, assemblies and modules are described throughout the present disclosure, it is noted that not all busbars are necessarily compatible with all holders or with every battery cell assembly or module configuration presented. However, such potential incompatibilities or mismatches are considered to be easily resolvable by the skilled person through routine adaptation or minor design modifications. These aspects do not detract from the core inventive concepts disclosed herein, which focus on the structural and functional separation of welding and cooling regions in busbars, and the integration of these busbars into thermally efficient battery systems.

Furthermore, although only a number of examples have been disclosed herein, other alternatives, modifications, uses and/or equivalents thereof are possible. All possible combinations of the described examples are also considered within the scope of the present disclosure. Accordingly, the examples described are intended to illustrate the principles of the invention, not to limit its practical implementation scope, which should be determined only by a fair reading of the claims that follow.

## Claims

1. A system for cooling a battery cell, the system comprising a busbar having a length, a width, and a height, the width being defined as a distance between a first surface and an opposite second surface of the busbar,
the busbar comprising a first three-dimensional, 3D, region extending along the entire width of the busbar and having a length and a height smaller than those of the busbar, and a second 3D region forming the remainder of the busbar, the first 3D region including a welding zone located on the first surface of the busbar, and
the busbar further comprising a conduit for a coolant liquid or fluid fully included in the second 3D region.

2. The system according to claim 1, wherein the busbar has a prismatic shape with constant cross-sectional dimensions along its length.

3. The system according to any of the preceding claims, wherein the first 3D region has a prismatic shape with constant cross-sectional dimensions along its length.

4. The system according to any of the preceding claims, wherein the conduit has a serpentine shape along all or part of its length within the second 3D region.

5. The system according to any of the preceding claims, wherein the conduit comprises an inlet and an outlet arranged on the same side of the busbar, the conduit having a substantially U-shaped configuration surrounding the first 3D region on which the welding zone is located.

6. The system according to any of the preceding claims, wherein the busbar further comprises a recess or a through-hole configured to receive a power connector, the recess or through-hole being arranged such that it does not interfere with the welding zone or the conduit.

7. The system according to any of the preceding claims, wherein the conduit has a cross-section comprising at least one of a sharp-pointed region, a stepped region, and a rounded region.

8. The system according to claim 7, wherein the conduit cross-section comprises a sharp-pointed region and a first stepped region arranged at opposite sides of the cross-section.

9. The system according to claim 8, wherein the conduit cross-section further comprises rounded regions arranged between the sharp-pointed region and the stepped region.

10. The system according to claim 9, wherein the conduit cross-section further comprises second and third stepped regions arranged at opposite sides of the cross-section, said second and third stepped regions being oriented in a direction other than the direction of the sharp-pointed region and the first stepped region.

11. The system according to claim 10, wherein said second and third stepped regions are oriented perpendicular to the direction of the sharp-pointed region and the first stepped region.

12. A busbar holder configured to support a plurality of busbars according to any of claims 1 to 11, the plurality of busbars comprising at least a first busbar and a second busbar arranged or arrangeable on the busbar holder such that their respective conduits collectively form a common conduit.

13. The busbar holder according to claim 12, wherein the busbar holder comprises a connecting conduit configured to fluidly connect the conduits of the first busbar and the second busbar, thereby forming the common conduit.

14. The busbar holder according to claim 12 or 13, wherein the busbar holder is configured to fluidly connect the conduits of the first busbar and the second busbar in a series arrangement or in a parallel arrangement.

15. A battery cell module comprising a plurality of battery cells, at least one busbar holder according to any of claims 12 to 14, and a plurality of busbars according to any of claims 1 to 11 supported by the at least one busbar holder, wherein the battery cells are electrically connected to the corresponding busbars by welding one or more battery cell tabs to the welding zones of the corresponding busbars.
